Europäisches Patentamt

(19) European Patent Office

Office européen des brevets

(11) Publication number: **0 127 701**
**A1**

## (12) EUROPEAN PATENT APPLICATION

(21) Application number: 83200825.4

(22) Date of filing: 07.06.83

(51) Int. Cl.³: **G 03 B 21/132**
G 02 F 1/13, G 09 F 19/18

(43) Date of publication of application:
12.12.84 Bulletin 84/50

(84) Designated Contracting States:
DE FR GB NL

(71) Applicant. Datelcare B.V.
Huis ter Heideweg 28
NL-3705 LZ Zeist(NL)

(72) Inventor: Bronckers, Robert Pierre Nicolaas, Dr.
Prof. R. Boslaan 18
NL-3571 CR Utrecht(NL)

(74) Representative: de Vries, Johannes Hendrik
Fokke et al,
Octrooibureau Los en Stigter B.V. P.O. Box 20052
NL-1000 HB Amsterdam(NL)

(54) Apparatus for projecting a light image.

(57) An apparatus for projecting a light image comprises a light source (2) and a projection lens (5). A polarising liquid crystal display means (7) is positioned in the beam path from the light source (2) to the projection lens (5), said liquid crystal display means (7) comprising a number of controllable picture elements. The liquid crystal display means (7) is located between a polarizer (8) and an analyser (9). A control unit (14) for controlling the picture elements is connected to the liquid crystal display means (7), which control unit comprises a micro-processor (16) adapted to be coupled with a computer. Thereby, the apparatus can project light images determined by data stored in the computer.

fig.1

Apparatus for projecting a light image.

The invention relates to an apparatus for projecting a light image, comprising a light source and a projection lens.

A known apparatus of this type is the known slide projector wherein a slide can be positioned in the beam path from the light source to the projection lens so that the picture registered in the slide can be projected on the screen. The known slide projector can be used for different purposes, such as for example for instructions, lectures, and the like. Although the known slide projector can be controlled by a computer for such applications, this shows the disadvantage that the slides have to be made in the usual manner, whereby the use of the slide projector is not very flexible. Moreover, it is not possible with the known slide projector to project an image depending on data stored in the computer.

The invention aims to provide an apparatus of the above-mentioned kind, by which images directly determined by a computer can be projected on a screen in a simple manner.

To this end, the apparatus according to the invention is characterized by a polarizing liquid crystal display means with a number of controllable picture elements, said liquid crystal display means being positioned between a polarizer and an analyser in the beam path from the light source to the projection lens, and by a control unit connected to the liquid crystal display means for controlling the picture elements, said control unit including a microprocessor adapted to be coupled with a computer.

In this manner an apparatus is obtained, by means of which each desired image can be projected on a screen, whereby the apparatus according to the invention is suited for many different applications. For example, the apparatus according to the invention can be used as large-screen terminal at computer aided instructions or at lectures or the like. Further, the apparatus can be used for displaying alternate advertising messages and the like.

Preferably, a heat filter and an ultraviolet filter are provided between the polarizer and the analyser. Thereby, the operational life of the liquid crystal display means, the

polarizer and the analyser are substantially increased.

According to a simple embodiment, both said filters, the polarizer, the analyser and the liquid crystal display means are mounted in a common holder.

The invention will hereinafter be further explained by reference to the drawings, in which some embodiments of the apparatus according to the invention are shown.

Fig. 1 schematically shows a first embodiment of the apparatus according to the invention.

Fig. 2 shows a detail II of fig. 1 in a larger scale.

Fig. 3 schematically shows a cross-section of a second embodiment of the apparatus according to the invention.

Fig. 4 schematically shows a side view of a third embodiment of the apparatus according to the invention.

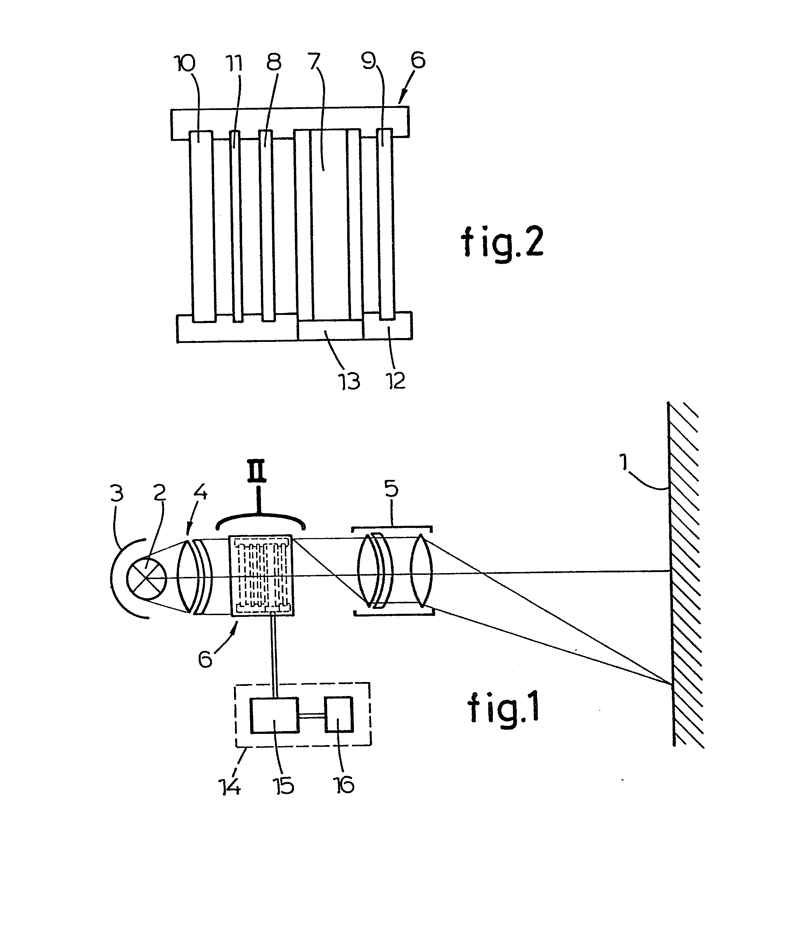

Fig. 1 schematically shows an apparatus for projecting a light image on a screen 1, said apparatus comprising a light source 2 with a reflector 3. The apparatus shown further comprises a condensor 4 and a projection lens 5 including a plurality of lens elements. A unit 6 is provided between the condensor 4 and the projection lens 5, which unit 6 is shown in detail in fig. 2 in a larger scale.

The unit 6 comprises a liquid crystal display means 7 located between a polarizer 8 and an analyser 9. A heat filter 10 and an ultraviolet filter 11 are provided at the side of the polarizer 8 directed to the condensor 4. The parts 7-11 are mounted in a common holder 12.

The liquid crystal display means 7 is provided with a connection means 13, by means of which the liquid crystal display means is connected to a control unit 14 for controlling the picture elements of the liquid crystal display means 7. The control unit 14 includes an independent driver stage 15 and a microprocessor 16. The driver stage 15 provides for the direct driving of the picture elements of the liquid crystal display means 7, while the microprocessor 16 is adapted to be coupled to a computer and can generate the desired image in response to the data supplied by the computer.

The apparatus described operates as follows.

The light from the light source 2 is concentrated and homogeneously distributed by the condensor 4 so that a uniform exposure of the liquid crystal display means 7 is obtained. To this end, the condensor 4 should be located as close as possible at the liquid crystal display means 7. The condensor 4 forms an image of the light source 2 in the plane of the projection lens 5. The polarizer 8 provides for a lineair polarisation of the transmitted light. Controlled by the control unit 14 a plurality of picture elements of the liquid crystal display means 7 are driven in correspondence with the desired image, whereby the liquid crystal display means rotates the polarized light over 90° at the driven picture elements. Depending on the position of the analyser 9 with respect to the polarizer 8 this light influenced by the picture elements is transmitted or stopped. Thereby,a bright image on a dark background or the inverse can be projected. Finally, the projection lens 5 forms an image of the liquid crystal display means on the projection screen 1.

By means of the apparatus described each desired image can be formed on a projection screen. The apparatus is especially suited as a peripheral apparatus for a computer for displaying information on a large scale. For example, the apparatus can be used as a large-screen terminal for computer aided instructions. Further, for example alternate advertising messages can be projected by the apparatus described. It is also possible to represent measuring results in explosion hazardous rooms perfectly safely. The apparatus can be used also as a large-screen clock. Further, the apparatus can be used as graphical output unit for projecting plan bords, ordnance-maps and the like.

Fig. 3 shows an embodiment of the apparatus according to the invention, in which the unit 6 is not read by transmission but by reflection. In this embodiment of fig. 3 two light sources 17 and 18 each having a reflector 19 are provided. The light of the light sources is directed on the unit 6, wherein an image depending on the driven picture elements of the liquid crystal display means 7 is reflected by a mirror 20 to the projection lens 5. The projection lens 5 projects the formed image on the projection screen 1. The operation of this embodiment further fully corresponds to the operation of the apparatus according to fig. 1.

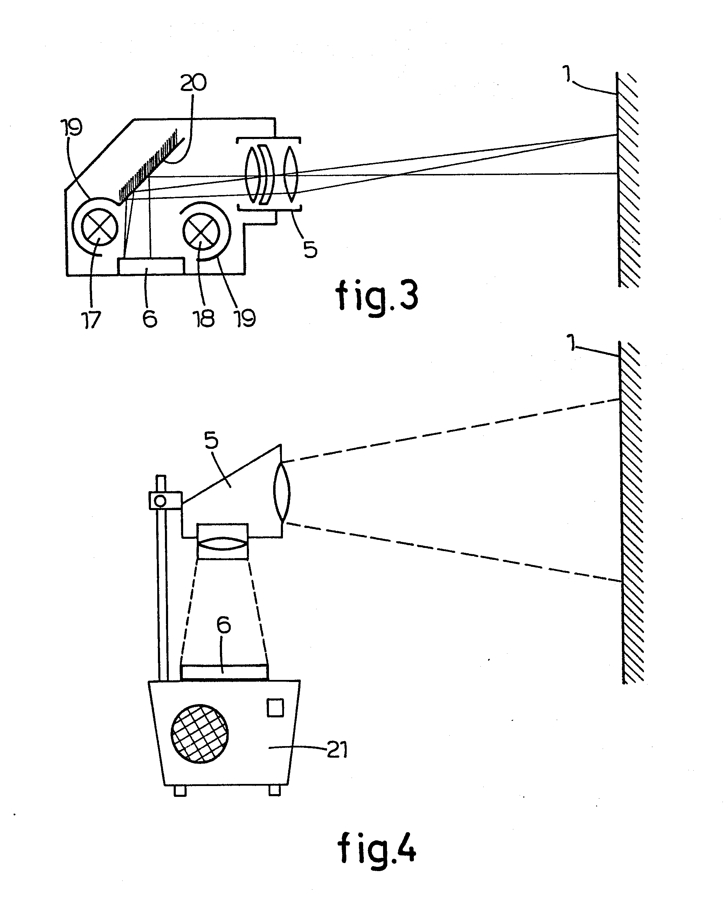

Fig. 4 shows a third embodiment of the apparatus according to the invention, which is made as an overhead projector. In this case, the unit 6 is positioned on the right aperture not shown of member 21, wherein the image determined by the driven picture elements of the liquid crystal display means 7 is projected on the projection screen 1 by the projection lens 5. The operation of this embodiment again fully corresponds to the operation of the embodiment of fig. 1.

The invention is not restricted to the above-described embodiments, which can be varied in a number of ways within the scope of the invention.

<u>CLAIMS</u>                    **0127701**

1. Apparatus for projecting a light image, comprising a light source and a projection lens, characterized by a polarizing liquid crystal display means with a number of controllable picture elements, said liquid crystal display means being positioned between a polarizer and an analyser in the beam path from the light source to the projection lens, and by a control unit connected to the liquid crystal display means for controlling the picture elements, said control unit including a microprocessor adapted to be coupled with a computer.

2. Apparatus according to claim 1, characterized in that a heat filter and an ultraviolet filter are provided between the polarizer and the analyser.

3. Apparatus according to claim 2, characterized in that both said filters, the polarizer, the analyser and the liquid crystal display means are mounted in a common holder.

fig.2

fig.1

fig.3

fig.4

## DOCUMENTS CONSIDERED TO BE RELEVANT

| Category | Citation of document with indication, where appropriate, of relevant passages | Relevant to claim | CLASSIFICATION OF THE APPLICATION (Int Cl. 3) |
|---|---|---|---|
| Y | DE-A-2 555 859 (THE RANK ORGANISATION LTD.) *Claims 1-2,4,7; page 5, last paragraph - page 7; figure 1* | 1 | G 03 B 21/132 G 02 F 1/13 G 09 F 19/18 |
| Y | DE-A-3 142 664 (ANDREAS OTTEN) *Claims 1-2,8; page 4, paragraphs 3-4; page 6, last paragraph - page 7; figure* | 1 | |
| A | FR-A-2 164 225 (SOCIETE ANONYME BROWN, BOVERI & CIE) *Claims 1,7-8; page 6, lines 12-22; figure 4* | 1-2 | |
| A | GB-A-1 488 153 (MINNESOTA MINING AND MANUFACTURING COMP.) *Claims 1-2; figures 1-2,4* | 1 | **TECHNICAL FIELDS SEARCHED (Int. Cl. 3)** G 03 B G 02 F G 09 F |

The present search report has been drawn up for all claims

| Place of search THE HAGUE | Date of completion of the search 03-05-1984 | Examiner FRANSEN L.J.L. |
|---|---|---|